Europäisches Patentamt

European Patent Office

Office européen des brevets

(11) Numéro de publication : **0 358 146 B1**

(12)

# FASCICULE DE BREVET EUROPEEN

(45) Date de publication du fascicule du brevet :
**13.05.92 Bulletin 92/20**

(51) Int. Cl.$^5$ : **F16F 7/14**

(21) Numéro de dépôt : **89116285.1**

(22) Date de dépôt : **04.09.89**

(54) **Dispositif amortisseur de chocs et de vibrations.**

(30) Priorité : **05.09.88 FR 8811584**

(43) Date de publication de la demande :
**14.03.90 Bulletin 90/11**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**WO-A-88/08933**
**DE-C- 3 446 831**
**DE-U- 1 878 231**

(56) Documents cités :
**FR-A- 2 281 977**
**FR-A- 2 509 000**
**FR-A- 2 603 959**
**FR-A- 2 624 233**
**GB-A- 853 878**

(73) Titulaire : **VIBRACHOC, Société Anonyme dite:**
**Parc d'Activités de l'Eglantier C.E. 2804 Lisses**
**F-91028 Evry Cédex (FR)**

(72) Inventeur : **Roche, André**
**6, rue des Tourterelles**
**F-78990 Elancourt (FR)**

(74) Mandataire : **Weinmiller, Jürgen et al**
**Lennéstrasse 9 Postfach 24**
**W-8133 Feldafing (DE)**

EP 0 358 146 B1

# Description

La présente invention concerne un dispositif amortisseur de chocs et de vibrations, comportant une structure métallique constitué de un ou plusieurs tronçons de câble enroulés en hélice, et de deux barrettes reliant les spires en des zones diamétralement opposées.

Ce dispositif est principalement utilisé pour réaliser une suspension entre deux autres structures, les deux barrettes servant alors de moyens de fixation permettant d'interposer ce dispositif amortisseur entre les deux structures.

On connaît, par le document FR-2 459 088, un tel dispositif amortisseur.

Ce dispositif amortisseur permet d'amortir des chocs de manière satisfaisante et ceci dans toutes les directions, car les déflexions permises sont importantes, mais l'amortissement des vibrations, obtenu uniquement par friction des brins de câble entre eux (frottement sec), est insuffisant.

On connaît aussi, par le document FR-2 603 959 qui décrit le contenu du préambule de la revendication 1, un perfectionnement qui consiste à enrober le dispositif amortisseur avec un matériau élastomèrique par vulcanisation ou polymèrisation à chaud en laissant subsister un orifice central, et à traiter le corps métallique (tronçons de câble et barrettes) pour adhérer au matériau élastomèrique.

Bien que l'on perde l'amortissement par frottement sec, le dispositif amortisseur ainsi obtenu permet de bien amortir les vibrations grâce à la présence du matériau élastomèrique, mais les chocs sont moins bien amortis car les déflexions entre spires sont limitées, ceci étant dû au fait que le matériau élastomèrique est adhéré sur les spires.

Le but de la présente invention est d'obtenir un amortissement correct des vibrations et des chocs, l'amortissement des vibrations étant obtenue grâce à la présence du matériau élastomèrique, et l'amortissement des chocs étant obtenu grâce au fait que le matériau élastomèrique n'adhère que sur les barrettes mais pas sur les spires des tronçons de câble, ce qui autorise de grandes déflexions et une amélioration de la durée de vie.

La présente invention a pour objet un dispositif amortisseur de chocs et de vibrations, comportant une structure métallique constituée de un ou plusieurs tronçons de câble enroulés en hélice et de deux barrettes reliant les spires en des zones diamétralement opposées, et d'une couche d'un matériau élastomèrique dans laquelle est noyée la structure en laissant subsister un orifice central, caractérisé en ce que les spires sont graissées ou traitées pour ne pas adhérer au matériau élastomèrique.

De préférence, le matériau élastomèrique est un matériau viscoélastique de la marque "Vibtène" de la Société VIBRACHOC.

Le traitement des spires peut être la dépose d'un produit silicone ou la dépose d'un matériau viscoélastique liquide, visqueux ou solide, ou encore l'enrobage par un tube viscoélastique libre ou rempli d'un produit viscoélastique.

Afin d'adapter l'amortissement en fonction des performances demandées, on pratique un orifice central de différentes formes et dimensions, et pour une même forme, on l'oriente différemment.

Il est décrit ci-après, en référence aux dessins annexés, un corps métallique d'un dispositif amortisseur selon l'invention et des exemples d'enrobage montrant différentes formes et différentes orientations de l'orifice central.

La figure 1 montre, en perspective, le corps métallique d'un dispositif amortisseur.

La figure 2 est une vue de face de la figure 1.

Les figures 3, 5 et 6 montrent trois formes différentes de l'orifice central, la figure 4 étant une vue de dessus de la figure 3.

Les figures 7, 9 et 10 montrent une quatrième forme de l'orifice central, mais dans des orientations différentes, la figure 8 étant une vue de dessus de la figure 7.

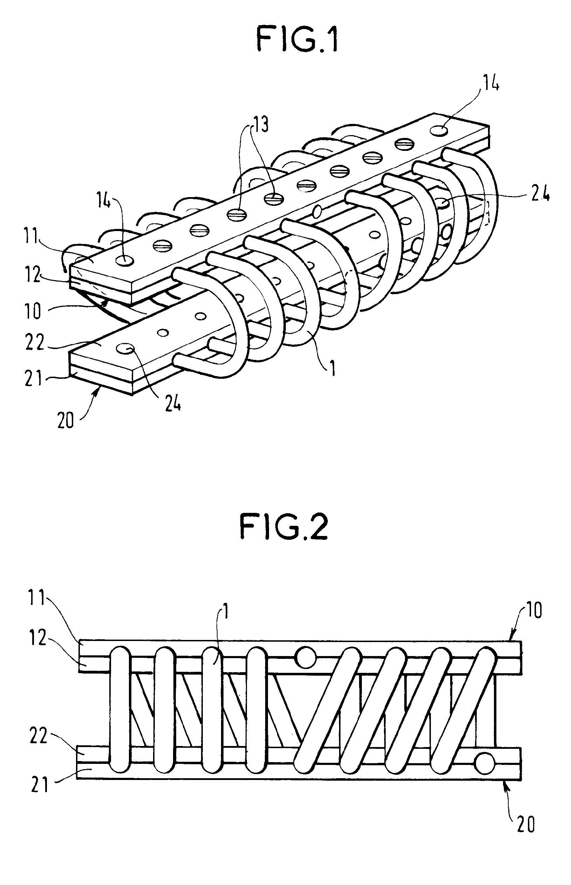

Dans la figure 1, la structure métallique est constituée d'un seul câble 1, dont la forme d'enroulement est bien visible en figure 2, et de deux barrettes 10 et 20.

La barrette 10 comporte deux demi-barrettes 11, 12, chaque demi-barrette comportant des encoches demi-cylindriques permettant la mise en place des spires du câble. Les deux demi-barrettes 11, 12 sont reliées par des vis 13. A ses deux extrémités, la barrette 10 comporte deux orifices 14 permettant sa fixation sur une structure à amortir.

La barrette 20 comporte également deux demi-barrettes 21, 22 reliées par des vis 23 non représentées, et elle comporte à ses deux extrémités, deux orifices 24 permettant sa fixation sur l'autre structure à amortir.

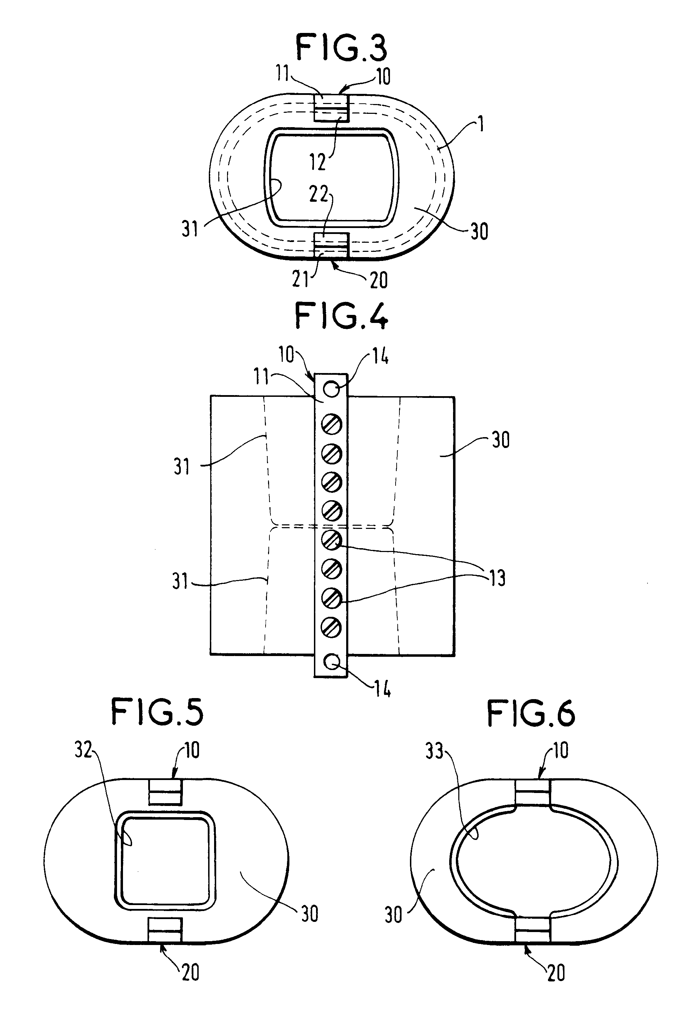

La figure 3 montre un dispositif composé d'un câble 1 et de deux barrettes 10, 20 enrobées par un matériau viscoélastique 30, l'orifice central 31 ayant une section sensiblement rectangulaire.

La figure 4, qui est une vue de dessus de la figure 3, montre que l'enrobage 30 enrobe complétement le câble jusqu'aux environs des orifices de fixation 14. Elle montre aussi la forme particulière de l'orifice 31 dans le sens de la longueur, cette forme en double cône permettant un démoulage aisé.

La figure 5 montre un orifice central 32 ayant une section sensiblement carrée, et la figure 6 montre un orifice central 33 ayant une section sensiblement ovale.

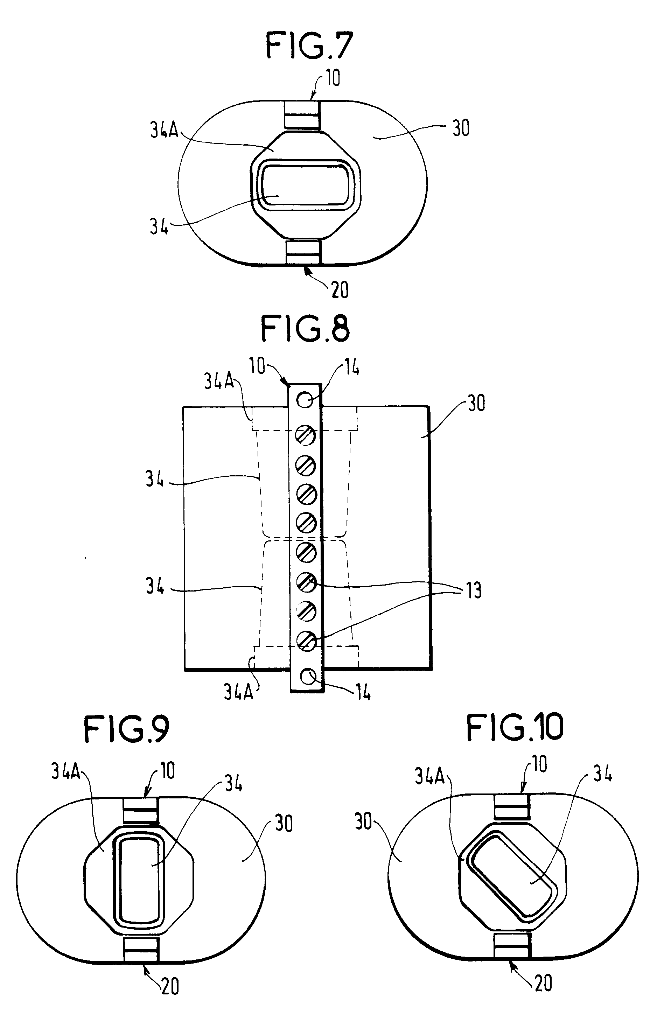

Les figures 7, 9 et 10 montrent un même orifice central 34 ayant une section approximativement rectangulaire. Mais, contrairement aux orifices 31, 32, 33 des figures 3, 5, 6, l'orifice 34 comporte, à chaque extrémité, un lamage 34A de section sensiblement hexagonale, sa profondeur étant visible dans la figure 8. Ce lamage permet un montage aisé des vis ou des boulons engagés dans les orifices de fixation 14, 24.

Les orientations différentes de l'orifice central permettent aussi d'adapter l'amortissement en fonction des performances demandées.

En particulier, l'orientation inclinée à 45°, visible en figure 10 permet d'adapter la raideur suivant deux axes orthogonaux.

Les figures 4 et 8 montrent que les orifices 31 et 34 laissent subsister une fine paroi centrale, mais bien entendu cette paroi peut être supprimée après moulage. La paroi peut aussi être plus épaisse, l'épaisseur de cette paroi étant déterminée en fonction de la raideur recherchée.

## Revendications

1. Dispositif amortisseur de chocs et de vibrations, comportant une structure métallique constituée de un ou plusieurs tronçons de câble (1) enroulés en hélice et de deux barrettes (10, 20) reliant les spires en des zones diamétralement opposées, et d'une couche d'un matériau élastomèrique (30) dans laquelle est noyée ladite structure en laissant subsister un orifice central (31, 32, 33, 34), caractérisé en ce que les spires des tronçons de câble (1) sont graissées ou traitées pour ne pas adhérer au matériau élastomèrique (30).

2. Dispositif selon la revendication 1, caractérisé en ce que le matériau élastomèrique est un matériau viscoélastique.

3. Dispositif selon l'une des revendications 1 ou 2, caractérisé en ce que l'orifice central (31, 32, 33, 34) présente différentes formes.

4. Dispositif selon la revendication 3, caractérisé en ce que, pour une même forme de l'orifice central (34), son orientation est différente.

5. Dispositif selon l'une des revendications précédentes, caractérisé en ce que l'orifice central (34) présente, à chaque extrémité, un lamage (34A) de forme hexagonale.

## Patentansprüche

1. Vorrichtung zum Dämpfen von Stößen und Vibrationen, mit einer Metallstruktur bestehend aus einer oder mehreren schraubenlinienförmig gewickelten Kabellängen (1) sowie zwei Stegen (10, 20), welche die Windungen in einander diametral gegenüberliegenden Zonen verbinden, und mit einer Schicht Elastomermaterial (30), in welcher die Metallstruktur unter Belassung einer zentralen Öffnung (31, 32, 33, 34) eingebettet ist, dadurch gekennzeichnet, daß die Windungen der Kabellängen (1) eingefettet oder so behandelt sind, daß sie nicht am Elastomermaterial (30) haften.

2. Vorrichtung nach Anspruch 1, dadurch gekennzeichnet, daß das Elastomermaterial ein viskoelastisches Material ist.

3. Vorrichtung nach einem der Ansprüche 1 oder 2, dadurch gekennzeichnet, daß die zentrale Öffnung (31, 32, 33, 34) unterschiedliche Formen besitzt.

4. Vorrichtung nach Anspruch 3, dadurch gekennzeichnet, daß bei gleicher Form der zentralen Öffnung (34) ihre Orientierung unterschiedlich ist.

5. Vorrichtung nach einem der vorhergehenden Ansprüche, dadurch gekennzeichnet, daß die zentrale Öffnung (34) eine Senkung (34A) hexagonaler Form aufweist.

## Claims

1. A vibration and shock absorber device, comprising a metal structure constituted by one or more helically wound lengths of cable (1) and two bars (10, 20) interconnecting the turns in two diametrically opposite zones, and by a layer of elastomer material (30), in which the structure is embedded, while leaving a central orifice (31, 32, 33, 34), the device being characterized in that the turns of the lengths of cable (1) are greased or treated to prevent them from adhering to the elastomer material (30).

2. A device according to claim 1, characterized in that the elastomer material is a visco-elastic material.

3. A device according to claim 1 or 2, characterized in that the central orifice (31, 32, 33, 34) may be of various different shapes.

4. A device according to claim 3, characterized in that for a given shape of the central orifice (34), the orientation of the orifice differs.

5. A device according to any preceding claim, characterized in that each end of the central orifice (34) has a cavity (34A) which is hexagonal in shape.

# FIG.1

# FIG.2

# FIG.3

# FIG.4

# FIG.5

# FIG.6

## FIG.7

## FIG.8

## FIG.9

## FIG.10

6